# EUROPEAN PATENT APPLICATION

(11) **EP 4 845 082 A1**
(43) Date of publication of application: **25.11.2026**
(21) Application number: 25760774.7
(22) Date of filing: 13.02.2025
(51) Int. Cl.: H04L 5/00

(54) **CHANNEL ESTIMATION METHOD AND DEVICE**

(30) Priority: 27.02.2024 CN 202410217291
(71) Applicant: Huawei Technologies Co., Ltd., Shenzhen, Guangdong 518129 (CN)
(72) Inventor: YE, Chencheng, Shenzhen, Guangdong 518129 (CN); YUAN, Yiling, Shenzhen, Guangdong 518129 (CN); GAO, Junhui, Shenzhen, Guangdong 518129 (CN); WANG, Xiaohan, Shenzhen, Guangdong 518129 (CN)
(74) Representative: Grünecker Patent- und Rechtsanwälte PartG mbB
(86) International application number: PCT/CN2025/077234
(87) International publication number: WO 2025/180231

(57) **Abstract**

A channel estimation method and an apparatus are provided, relating to the field of communication technologies, and capable of shortening uplink channel estimation time and improving uplink channel estimation accuracy. The method includes: A terminal receives downlink reference signals on J time units; the terminal determines time domain information based on the downlink reference signals on the J time units, and reports the time domain information; the terminal sends a first uplink reference signal; and a base station determines an uplink channel based on the time domain information and the first uplink reference signal, where the uplink channel is an uplink channel of J1 time units, both J and J1 are positive integers, and J is greater than J1. According to this solution, the terminal determines the time domain information based on the downlink reference signals on the J time units, and the base station determines, based on the time domain information and the first uplink reference signal, the uplink channel corresponding to the J1 time units. In this way, the base station does not need to wait for the terminal to send uplink reference signals on the J1 time units, and does not need to determine, based on the uplink reference signals, the uplink channel corresponding to the J1 time units.

## Description

This application claims priority to Chinese Patent Application No. 202410217291.3, filed with the China National Intellectual Property Administration on February 27, 2024 and entitled "CHANNEL ESTIMATION METHOD AND APPARATUS", which is incorporated herein by reference in its entirety.

### TECHNICAL FIELD

This application relates to the field of communication technologies, and in particular, to a channel estimation method and an apparatus.

### BACKGROUND

When a multiple-input multiple-output (multiple input multiple output, MIMO) technology is used, before sending data to user equipment (user equipment, UE), a base station needs to precode the data, to improve spectrum efficiency of a communication system. The base station may precode the data based on channel state information (channel state information, CSI) of a downlink channel. How to estimate a channel between the base station and the UE is an urgent problem to be resolved.

### SUMMARY

This application provides a channel estimation method and an apparatus, to implement channel estimation.

To achieve the foregoing objective, embodiments of this application provide the following technical solutions.

According to a first aspect, a channel estimation method is provided. The method may be performed by a terminal; may be performed by a module used in the terminal, for example, a chip, a chip system, or a circuit; or may be implemented by a logical module or software that can implement all or a part of functions of the terminal. This is not limited herein. For example, the method may be performed by a communication module in the terminal, or a circuit or a chip (for example, a modem (modem) chip, also referred to as a baseband (baseband) chip, a system on chip (system on chip, SoC) including a modem core, or a system in package (system in package) SIP chip) responsible for a communication function in the terminal. For ease of description, the following uses an example in which the method is performed by the terminal for description.

The method includes: receiving downlink reference signals on J time units; reporting time domain information, where the time domain information is time domain information determined based on the downlink reference signals on the J time units; and sending a first uplink reference signal, where the time domain information and the first uplink reference signal are used to determine an uplink channel, the uplink channel is an uplink channel of J1 time units, both J and J1 are positive integers, and J is greater than J1.

According to this solution, the terminal determines the time domain information based on the downlink reference signals on the J time units, and a base station determines, based on the time domain information and the first uplink reference signal, the uplink channel corresponding to the J1 time units. In this way, the base station does not need to wait for the terminal to send uplink reference signals on the J1 time units, and does not need to determine, based on the uplink reference signals, the uplink channel corresponding to the J1 time units. Therefore, time for determining, by the base station, the uplink channel corresponding to the J1 time units is shortened, and accuracy of uplink channel estimation is improved.

With reference to the first aspect, in a possible design, the time domain information includes a plurality of pieces of first time domain information, and each of the plurality of pieces of first time domain information indicates time domain information of different frequency domain units and different base station spatial domain units; or the time domain information includes a plurality of pieces of second time domain information, and each piece of second time domain information indicates time domain information of different base station spatial domain units; or the time domain information includes one piece of third time domain information, and the third time domain information indicates time domain information of a plurality of base station spatial domain units and a plurality of frequency domain units. According to this solution, the terminal may report time domain information in different forms, for example, the first time domain information to the third time domain information. For example, a quantity of terminal spatial domain units is W. Compared with directly reporting time domain information of different frequency domain units, different base station spatial domain units, and different terminal spatial domain units, reporting the first time domain information can eliminate the need to report time domain information of frequency domain units and base station spatial domain units corresponding to W-1 terminal spatial domain units, thereby reducing occupation of air interface resources. For example, a quantity of frequency domain units in the first time domain information is M. Compared with reporting the first time domain information, reporting the second time domain information can eliminate the need to report time domain information corresponding to M-1 frequency domain units. For example, a quantity of base station spatial domain units in the second time domain information is L. Compared with reporting the first time domain information, reporting the second time domain information can eliminate the need to report time domain information corresponding to L-1 base station spatial domain units.

With reference to the first aspect, in a possible design, the method further includes: receiving indication information, where the indication information indicates the terminal to report the first time domain information, or indicates the terminal to report the second time domain information, or indicates the terminal to report the third time domain information; and the reporting the time domain information includes: reporting the time domain information based on the indication information. According to this solution, the base station may indicate a form of the time domain information reported by the terminal, for example, one of the first time domain information to the third time domain information. Therefore, when the time domain information reported by the terminal is an eigenvector of *R^{s}* or an eigenvector of *R* , a relatively small quantity of air interface resources are occupied.

With reference to the first aspect, in a possible design, there are a plurality of time units for first uplink reference signals, and a time interval between downlink reference signals on every two adjacent time units in the downlink reference signals on the J time units is the same as a time interval between first uplink reference signals on every two adjacent time units in the first uplink reference signals on the plurality of time units. According to this solution, the base station may determine, based on time domain information corresponding to the downlink reference signals on the J time units, the uplink channel corresponding to the J1 time units. Therefore, time for determining the uplink channel corresponding to the J1 time units is shortened.

With reference to the first aspect, in a possible design, a quantity of time units for the first uplink reference signals is J2, J is greater than or equal to J2+J1, time intervals between adjacent time units in the J2 time units are the same, time intervals between adjacent time units in the J1 time units are the same, the time interval between every two adjacent time units in the J1 time units is smaller than the time interval between every two adjacent time units in the J2 time units, and a time interval between every two adjacent time units in time units for J2 downlink reference signals is the same as a time interval between every two adjacent time units in time units for J2 first uplink reference signals. According to this solution, the base station may determine an uplink channel corresponding to time units whose time interval is smaller than the time interval of the first uplink reference signals, thereby reducing a time interval of the estimated uplink channel and improving accuracy of uplink channel estimation.

With reference to the first aspect, in a possible design, the time domain information is an eigenvector corresponding to a covariance matrix of a channel corresponding to the J time units.

According to a second aspect, a channel estimation method is provided. The method may be performed by a network device, may be performed by a module used in the network device, for example, a chip, a chip system, or a circuit, or may be implemented by a logical module, a logical node, or software that can implement all or a part of functions of the network device. This is not limited herein. For ease of description, the following uses an example in which the method is performed by the network device for description.

The method includes: sending downlink reference signals on J time units; receiving time domain information, where the time domain information is time domain information determined based on the downlink reference signals on the J time units; receiving a first uplink reference signal; and determining an uplink channel based on the time domain information and the first uplink reference signal, where the uplink channel is an uplink channel of J1 time unit, both J and J1 are positive integers, and J is greater than J1.

With reference to the second aspect, in a possible design, the time domain information includes a plurality of pieces of first time domain information, and each of the plurality of pieces of first time domain information indicates time domain information of different frequency domain units and different base station spatial domain units; or the time domain information includes a plurality of pieces of second time domain information, and each piece of second time domain information indicates time domain information of different base station spatial domain units; or the time domain information includes one piece of third time domain information, and the third time domain information indicates time domain information of a plurality of base station spatial domain units and a plurality of frequency domain units.

With reference to the second aspect, in a possible design, the method further includes: sending indication information, where the indication information indicates a terminal to report the first time domain information, or indicates the terminal to report the second time domain information, or indicates the terminal to report the third time domain information.

With reference to the second aspect, in a possible design, there are a plurality of time units for first uplink reference signals, and a time interval between downlink reference signals on every two adjacent time units in the downlink reference signals on the J time units is the same as a time interval between first uplink reference signals on every two adjacent time units in the first uplink reference signals on the plurality of time units.

With reference to the second aspect, in a possible design, a quantity of time units for the first uplink reference signals is J2, J is greater than or equal to J2+J1, time intervals between adjacent time units in the J2 time units are the same, time intervals between adjacent time units in the J1 time units are the same, the time interval between every two adjacent time units in the J1 time units is smaller than the time interval between every two adjacent time units in the J2 time units, and a time interval between every two adjacent time units in time units for J2 downlink reference signals is the same as a time interval between every two adjacent time units in time units for J2 first uplink reference signals.

With reference to the second aspect, in a possible design, the time domain information is an eigenvector corresponding to a covariance matrix of a channel corresponding to the J time units.

According to a third aspect, a communication apparatus is provided, including a functional module, a unit, or a means configured to perform the method in any possible design of any one of the foregoing aspects of this application. The module may be implemented by using software or hardware, or may be implemented by using a combination of software and hardware. For example, a processing unit and a communication unit are included. This is not limited.

According to a fourth aspect, a communication system is provided, including a first apparatus and a second apparatus. The first apparatus performs the method according to any one of the first aspect and the implementations of the first aspect, and the second apparatus performs the method according to any one of the second aspect and the implementations of the second aspect.

According to a fifth aspect, a communication apparatus is provided, including a processor and a memory. The memory is configured to store computer instructions, and when the processor executes the instructions, the computer instruction is caused to perform the method according to any one of the first aspect and the implementations of the first aspect, or the computer instruction is caused to perform the method according to any one of the second aspect and the implementations of the second aspect.

According to a sixth aspect, a chip system is provided. The chip system includes a processor, configured to support a communication apparatus in implementing the function according to any one of the first aspect and the implementations of the first aspect, or implementing the function according to any one of the second aspect and the implementations of the second aspect. In a possible design, the chip system further includes a memory, configured to store program instructions and data that are necessary for the communication apparatus. The chip system may include a chip, or may include a chip and another discrete device.

According to a seventh aspect, a technical solution of this application provides a communication apparatus, including a processor, configured to perform the method according to any design of any one of the foregoing aspects.

Optionally, the apparatus further includes a memory and/or a communication interface.

The communication interface is coupled to the processor, and the communication interface is configured to receive and/or send a signal.

The memory is configured to store a computer program. The processor is configured to perform the method according to any one of the first aspect and the implementations of the first aspect, and may be implemented as: executing the computer program stored in the memory, to perform the method according to any one of the first aspect and the implementations of the first aspect.

Alternatively, the processor may be a circuit implemented by hardware, for example, an artificial intelligence (artificial intelligence, AI) processor, to improve a running speed. A specific implementation of the processor is not limited in this application.

Optionally, the communication apparatus may be an entire device, or a module in the device, for example, a chip.

According to an eighth aspect, a communication apparatus is provided. The communication apparatus has a function of implementing the method according to any one of the first aspect and the implementations of the first aspect, or has a function of implementing the method according to any one of the second aspect and the implementations of the second aspect. The function may be implemented by hardware, or may be implemented by hardware executing corresponding software. The hardware or the software includes one or more units or modules corresponding to the foregoing function.

According to a ninth aspect, a communication apparatus is provided, including a processor. The processor is configured to: after being coupled to a memory and reading instructions in the memory, perform the method according to any one of the first aspect and the implementations of the first aspect according to the instructions, or perform the method according to any one of the second aspect and the implementations of the second aspect according to the instructions.

According to a tenth aspect, a computer-readable storage medium is provided. The computer-readable storage medium stores instructions. When the instructions are run on a communication apparatus, the communication apparatus performs the method according to any one of the first aspect and the implementations of the first aspect, or the communication apparatus performs the method according to any one of the second aspect and the implementations of the second aspect.

According to an eleventh aspect, a computer program product is provided, including a computer program. When the computer program is executed by a processor, the method according to any one of the first aspect and the implementations of the first aspect is implemented, or the method according to any one of the second aspect and the implementations of the second aspect is implemented.

It may be understood that, for beneficial effects that can be achieved by the method, the communication system, the communication apparatus, the chip system, the computer-readable storage medium, and the computer program product provided in the second aspect to the eleventh aspect, refer to beneficial effects in the first aspect and any possible implementation provided above. Details are not described herein again.

### BRIEF DESCRIPTION OF DRAWINGS

FIG. 1 is a diagram of an architecture of a communication system to which an embodiment of this application is applied;
FIG. 2 is a diagram of interaction in a communication system according to an embodiment of this application;
FIG. 3 is a flowchart of an uplink channel estimation method in a related technology;
FIG. 4 is a schematic flowchart of a method according to an embodiment of this application;
FIG. 5 is a diagram of time domain covariance matrices according to an embodiment of this application;
FIG. 6 is a diagram of other time domain covariance matrices according to an embodiment of this application;
FIG. 7 is a diagram of still other time domain covariance matrices according to an embodiment of this application;
FIG. 8 is a diagram of yet other time domain covariance matrices according to an embodiment of this application;
FIG. 9 is a diagram of a scenario according to an embodiment of this application;
FIG. 10 is a diagram of another scenario according to an embodiment of this application;
FIG. 11 is a diagram of still another scenario according to an embodiment of this application;
FIG. 12 is a schematic flowchart of another method according to an embodiment of this application;
FIG. 13 is a diagram of a structure of a communication apparatus according to an embodiment of this application; and
FIG. 14 is a diagram of a structure of another communication apparatus according to an embodiment of this application.

### DESCRIPTION OF EMBODIMENTS

In descriptions of this application, unless otherwise specified, "/" means "or". For example, A/B may indicate A or B. The term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. The terms such as "first" and "second" do not limit a quantity and an execution sequence, and the terms such as "first" and "second" do not indicate a definite difference.

It should be noted that in this application, the term such as "example" or "for example" indicates giving an example, an illustration, or a description. Any embodiment or design scheme described as an "example" or "for example" in this application should not be explained as being more preferred or having more advantages than another embodiment or design scheme. To be precise, use of the terms such as "example" or "for example" is intended to present a relevant concept in a specific manner.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

The technical solutions provided in embodiments of this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) mobile communication system and an evolved system of 5G, a vehicle-to-everything (vehicle to everything, V2X) system, an LTE and NR hybrid networking system, a device-to-device (device-to-device, D2D) system, a machine-to-machine (machine to machine, M2M) communication system, internet of things (internet of things, IoT), another next-generation communication system, and the like.

The communication system in embodiments of this application is not limited to a communication system in the following example. The communication system includes an apparatus 1 and an apparatus 2. The apparatus 1 is configured to send time domain information of a reference signal, and the apparatus 2 is configured to receive the time domain information of the reference signal. For the time domain information, refer to the following descriptions. Unified descriptions are provided herein, and details are not described again below.

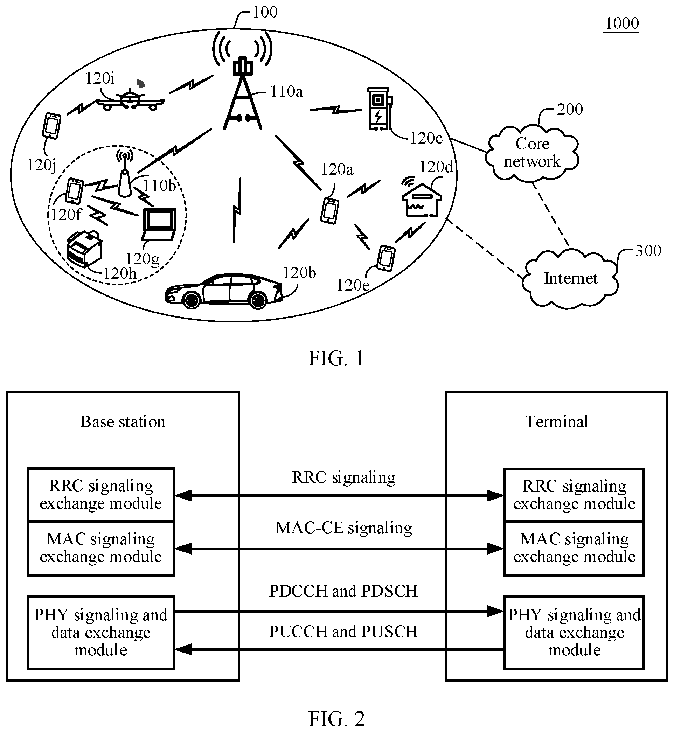

FIG. 1 is a diagram of an architecture of a communication system according to an embodiment of this application. As shown in FIG. 1, the communication system 1000 includes a radio access network (radio access network, RAN) 100 and a core network 200. Optionally, the communication system 1000 may further include an internet 300. The RAN 100 includes at least one RAN node (for example, 110a and 110b in FIG. 1, collectively referred to as 110), and may further include at least one terminal (for example, 120a to 120j in FIG. 1, collectively referred to as 120). The RAN 100 may further include another RAN node, for example, a wireless relay device and/or a wireless backhaul device (not shown in FIG. 1). The terminal 120 is connected to the RAN node 110 in a wireless manner, and the RAN node 110 is connected to the core network 200 in a wireless or wired manner. A core network device in the core network 200 and the RAN node 110 in the RAN 100 may be different independent physical devices, or may be a same physical device that integrates a logical function of the core network device and a logical function of the RAN node. The terminals may be connected to each other in a wired or wireless manner, and the RAN nodes may be connected to each other in a wired or wireless manner.

The RAN 100 may be an evolved universal terrestrial radio access (evolved universal terrestrial radio access, E-UTRA) system, a new radio (new radio, NR) system, and a future radio access system defined in a 3rd generation partnership project (3rd generation partnership project, 3GPP). The RAN 100 may further include the foregoing two or more different radio access systems. The RAN 100 may alternatively be an open RAN (open RAN, O-RAN).

The RAN node, also referred to as a radio access network device, a RAN apparatus, a RAN device or an access node, is configured to help the terminal access the communication system in a wireless manner. In an application scenario, the RAN node may be a base station (base station), an evolved NodeB (evolved NodeB, eNodeB), a transmission reception point (transmission reception point, TRP), a next-generation NodeB (next generation NodeB, gNB) in a 5th generation (5th generation, 5G) mobile communication system, a next-generation base station in a 6th generation (6th generation, 6G) mobile communication system, a base station in a future mobile communication system, or an access node in a Wi-Fi system. The RAN node may be a macro base station (for example, 110a in FIG. 1), may be a micro base station or an indoor base station (for example, 110b in FIG. 1), or may be a relay node or a donor node.

In another application scenario, a plurality of RAN nodes may cooperate to help the terminal implement radio access, and different RAN nodes respectively implement some functions of the base station. For example, the RAN node may be a central unit (central unit, CU), a distributed unit (distributed unit, DU), or a radio unit (radio unit, RU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For detailed descriptions of the foregoing protocol layers, refer to related technical specifications in 3GPP. The RU may be configured to implement a transceiver function of a radio frequency signal. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be classified into two types of RAN nodes at a CU-control plane and a CU-user plane.

In different systems, the RAN node may be referred to as different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of the software module and the hardware module. For example, the RAN node may be a server loaded with a corresponding software module. A specific technology and a specific device form that are used by the RAN node are not limited in embodiments of this application. For ease of description, the following uses an example in which the base station is used as the RAN node for description.

The terminal is a device having a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, smart grid, smart home, smart office, smart wearable, smart transportation, and smart city. The terminal may be a mobile phone, a tablet computer, a computer having a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or mobile. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Communication between the base station and the terminal, between the base stations, or between the terminals may be performed by using a licensed spectrum, may be performed by using an unlicensed spectrum, or may be performed by using both the licensed spectrum and the unlicensed spectrum. Communication may be performed by using a spectrum below 6 gigahertz (gigahertz, GHz), may be performed by using a spectrum above 6 GHz, or may be performed by using both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. A function of the terminal may be performed by a module (for example, a chip or a modem) in the terminal, or may be performed by an apparatus including the function of the terminal.

Refer to FIG. 2. The base station and the terminal may include a radio resource control (radio resource control, RRC) signaling interaction module, a medium access control (medium access control, MAC) signaling interaction module, and a physical layer (physical layer, PHY) signaling and data interaction module.

The RRC signaling interaction module is configured to send and receive RRC signaling between the base station and the UE.

The MAC signaling interaction module is configured to send and receive MAC-CE signaling between the base station and the UE.

The PHY signaling and data interaction module is configured to send and receive an uplink/downlink signal between the base station and the UE, for example, uplink/downlink control signaling and uplink/downlink data.

In this application, the base station sends a downlink signal to the terminal, where the downlink signal is carried on a downlink channel; and the terminal sends an uplink signal to the base station, where the uplink signal is carried on an uplink channel. For example, the uplink channel may be a channel such as a physical downlink control channel (physical downlink control channel, PDCCH) or a physical downlink shared channel (physical downlink shared channel, PDSCH). The uplink channel may be a channel such as a physical uplink control channel (physical uplink control channel, PUCCH) or a physical uplink shared channel (physical uplink shared channel, PUSCH). To communicate with the base station, the terminal needs to establish a wireless connection to a cell controlled by the base station.

It should be noted that the communication system described in embodiments of this application is intended to describe the technical solutions in embodiments of this application more clearly, and does not constitute any limitation on the technical solutions provided in embodiments of this application. A person of ordinary skill in the art may learn that the technical solutions provided in embodiments of this application are also applicable to a similar technical problem as a network architecture evolves and a new service scenario emerges.

With continuous development of communication technologies, 5G communication systems have higher requirements on system capacity and spectral efficiency. To improve spectral efficiency of the 5G communication system, a MIMO technology emerges accordingly. When the MIMO technology is applied, before sending data to UE, a base station needs to precode the data based on a channel state. In a time division duplex (time division duplexing, TDD) system, an uplink channel and a downlink channel are reciprocal. In a precoding process, the base station may use reciprocity of the uplink-downlink channel. The base station may perform channel estimation on the uplink channel based on a received uplink reference signal, so that the base station may determine, based on a channel state of the uplink channel, an appropriate precoding matrix to precode the data.

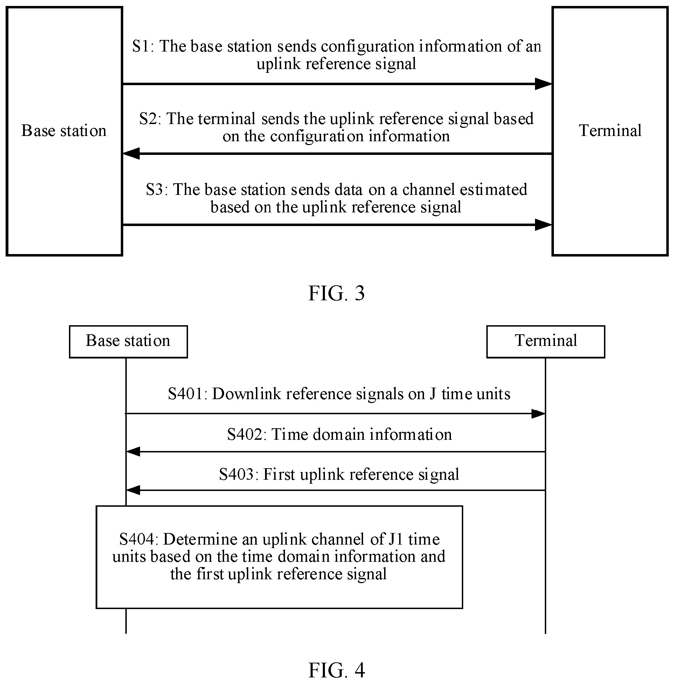

Refer to FIG. 3. In a related technology, for a manner of uplink channel estimation, refer to the following steps.

S1: A base station sends configuration information of an uplink reference signal. The configuration information includes a time-frequency resource used by a terminal to send the uplink reference signal, and the like.

S2: The terminal sends the uplink reference signal based on the configuration information. The base station may estimate an uplink channel based on the uplink reference signal.

S3: The base station sends data on the channel estimated based on the uplink reference signal. Based on the reciprocity of uplink-downlink channel, the base station may precode the data based on the uplink channel, and send the data to the base station.

In the foregoing solution, the base station determines a channel between the base station and the terminal based on the uplink reference signal sent by the terminal. However, the base station usually communicates with a plurality of terminals at the same time. Because an uplink channel capacity is limited, the plurality of terminals need to contend for an uplink channel. Consequently, an interval between time resources allocated to a same terminal each time for sending an uplink reference signal is excessively large. Therefore, it takes long time for the base station to estimate the channel once. However, because a channel changes frequently, a difference between a channel estimated by using this method and an actual channel is relatively large, and channel precision is low. Consequently, quality of communication between the base station and the terminal is low.

Based on this, an embodiment of this application proposes a channel estimation method. In the method, a terminal sends an uplink reference signal and time domain information of a downlink channel, and a base station receives the uplink reference signal and the time domain information of the downlink channel. The time domain information of the downlink channel is determined based on downlink reference signals on J time units. In this way, the base station predicts, based on the time domain information of the downlink channel and the uplink reference signal sent by the terminal, an uplink channel of J1 time units. According to the method, the base station may predict the uplink channel of the J1 time units, and does not need to wait for the base station to receive uplink reference signals on the J1 time units to obtain the uplink channel, so that channel estimation is faster, a difference between a channel estimation result and an actual channel is relatively small, and quality of communication with the terminal is improved.

Refer to FIG. 4. The method in this embodiment of this application includes the following steps.

S401: A base station sends downlink reference signals on J time units. Correspondingly, a terminal receives the downlink reference signals on the J time units.

J is a positive integer.

For example, the downlink reference signal is a CSI-RS, a demodulation reference signal (demodulation reference signal, DMRS), or the like.

The base station may send one or more downlink reference signals on each time unit.

S402: The terminal reports time domain information. Correspondingly, the base station receives the time domain information.

The time domain information is time domain information determined based on the downlink reference signals on the J time units. In other words, the time domain information represents time domain features of the downlink reference signals on the J time units.

After receiving the downlink reference signals on the J time units, the terminal may determine a time domain covariance matrix ${R}_{{n}_{r}}^{s , f}$ of a downlink channel corresponding to each terminal spatial domain unit *nᵣ.* Refer to Formula 1. ${R}_{{n}_{r}}^{s , f} = {C}_{{n}_{r}}^{s , f} {C}_{{n}_{r}}^{s , {f}^{H}}$ Formula 1 ${R}_{{n}_{r}}^{s , f}$ is a matrix with J rows and J columns, and represents a time domain feature of a downlink channel. ${C}_{{n}_{r}}^{s , f} = {\left[{C}_{{n}_{r}}^{s , f}\left(1\right),{C}_{{n}_{r}}^{s , f}\left(2\right),…,{C}_{{n}_{r}}^{s , f}\left(J\right)\right]}^{H}$, and ${C}_{{n}_{r}}^{s , f} \left(i\right) = {S}^{H} {H}_{{n}_{r}} \left(i\right) F$. *s* represents an index of a base station spatial domain unit (also referred to as an angle index), *f* represents an index of a frequency domain unit (also referred to as a delay index), and *s*, *f* represents an index of a base station spatial-frequency domain unit, which is referred to as a spatial-frequency unit for short, and indicates a two-dimensional unit including one base station spatial domain unit and one frequency domain unit. i represents a time unit index, a value of i is in a range of [1, J], and i is an integer. ${C}_{{n}_{r}}^{s , f} \left(i\right)$ is a matrix with one row and one column, and represents a downlink channel corresponding to a time unit i and a spatial-frequency unit (s, f). *nᵣ* represents an index of a terminal spatial domain unit. *H_{nᵣ}(i)* is a matrix with N rows and Z columns, and represents a downlink channel obtained by the terminal through measurement based on a downlink reference signal on the time unit i. N is a quantity of downlink reference signal ports, and Z is equal to a quantity of frequency domain units. *S* is a predefined column vector determined based on s, for example, $S = \left[1,{e}^{- \frac{s}{N} 2 πj},{e}^{- \frac{2 s}{N} 2 πj},…,{e}^{- \frac{\left(N-1\right) s}{N} 2 πj}\right]$. *F* is a predefined column vector determined based on f, for example, $F = \left[1,{e}^{- \frac{f}{Z} 2 πj},{e}^{- \frac{2 f}{Z} 2 πj},…,{e}^{- \frac{\left(Z-1\right) f}{Z} 2 πj}\right]$*.* [ ]*^{H}* represents conjugate transposition.

For example, a value of *s* is in a range of [0, N-1], and a value of *f* is in a range of [0, Z-1].

For example, each base station spatial domain unit corresponds to one downlink reference signal port.

For example, the base station may indicate a quantity of base station spatial domain units and a quantity of frequency domain units to the terminal, so that the terminal determines a dimension of *H_{nᵣ}*(i).

For example, the time domain information includes a plurality of pieces of first time domain information, and each of the plurality of pieces of first time domain information indicates time domain information of different frequency domain units and different base station spatial domain units. Alternatively, each of the plurality of pieces of first time domain information indicates time domain information corresponding to different spatial-frequency units. For example, the terminal may determine a time domain covariance matrix *R*^{*s*,*f*} for each spatial-frequency unit.

To be specific, the terminal unifies time domain covariance matrices corresponding to a same spatial-frequency unit received by each terminal spatial domain unit, to obtain the time domain covariance matrix *R*^{*s*,*f*} corresponding to each spatial-frequency unit.

In some embodiments, a manner of unifying the time domain covariance matrices ${R}_{{n}_{r}}^{s , f}$ includes: performing summation, averaging, or weighted summation on the time domain covariance matrices ${R}_{{n}_{r}}^{s , f}$ of downlink channels corresponding to terminal spatial domain units *nᵣ* .

One terminal spatial domain unit may be one antenna or a combination of a plurality of antennas of the terminal. One base station spatial domain unit may be one antenna or a combination of a plurality of antennas of the base station. One time unit may be one slot (slot), one symbol (symbol), or the like. One frequency domain unit may be one resource block (resource block, RB) or one resource element (resource element, RE).

The time domain information is an eigenvector corresponding to a covariance matrix of a channel corresponding to the J time units.

For example, the first time domain information may be eigenvectors of the time domain covariance matrix *R*^{*s*,*f*}. The eigenvector represents an association relationship between the downlink reference signals on the J time units in time domain.

If the base station indicates the terminal to report time domain covariance matrices *R*^{*s*,*f*} corresponding to L base station spatial domain units and M frequency domain units, a quantity of eigenvectors of each time domain covariance matrix *R*^{*s*,*f*} is *K*₁ , and reporting overheads of each eigenvector are Q bits, a quantity of the time domain covariance matrices *R^{s,f}* is LM, and reporting overheads of the first time domain information are *LMK*₁*Q* bits, where L is less than or equal to N, and M is less than or equal to Z.

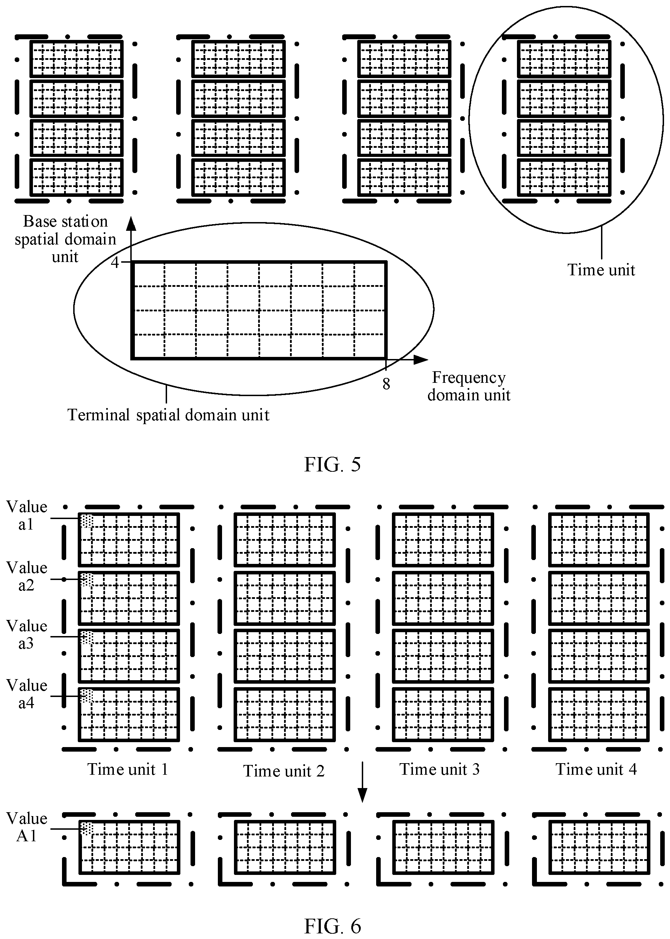

As shown in FIG. 5, for example, a quantity of base station spatial domain units is 4, a quantity of frequency domain units is 8, a quantity of terminal spatial domain units is 4, and a quantity of time units is 4. A dashed box represents a base station spatial domain unit and a frequency domain unit, a solid box represents a terminal spatial domain unit, and a dotted-line box represents a time unit. A dashed box in a solid box in each dotted-line box represents a time domain covariance matrix corresponding to one frequency domain unit, one time unit, one base station spatial domain unit, and one terminal spatial domain unit.

In some embodiments, one spatial-frequency unit may correspond to U terminal spatial domain units. In some embodiments, the terminal may unify time domain covariance matrices of a plurality of terminal spatial domain units corresponding to a same spatial-frequency unit. For example, U is equal to the quantity of terminal spatial domain units, for example, O=4.

Refer to FIG. 6. Time units include a time unit 1 to a time unit 4. Using one spatial-frequency unit (a dashed box filled with points shown in FIG. 6) corresponding to the time unit 1 as an example, values of time domain covariance matrices ${R}_{{n}_{r}}^{s , f}$ corresponding to a terminal spatial domain unit 1 to a terminal spatial domain unit 4 are respectively a value a1 to a value a4. After the terminal spatial domain units are unified, values of the time domain covariance matrices *R^{s,f}* corresponding to the terminal spatial domain unit 1 to the terminal spatial domain unit 4 are all a value A1. The time domain covariance matrices of the terminal spatial domain units are unified. In some cases, for one time domain unit and one spatial-frequency unit, only eigenvectors of one unified time domain covariance matrix *R^{s,f}* that need to be reported, and (*U*-1)*LMK*₁*Q* bits are reduced compared with directly transmitting eigenvectors of a time domain covariance matrix corresponding to each terminal spatial domain unit, where U represents the quantity of terminal spatial domain unit.

Optionally, *K*₁ may be *K*₁ eigenvectors that correspond to largest eigenvalues in J eigenvectors obtained by decomposing the time domain covariance matrix *R^{s,f}.*

In another example, the first time domain information may alternatively be an orthogonal vector group obtained by performing Gram-Schmidt orthogonalization on the time domain covariance matrix *R^{s,f}.* A form of the first time domain information is not limited in this application.

For another example, the time domain information includes a plurality of pieces of second time domain information, and each of the plurality of pieces of second time domain information indicates time domain information of a different base station spatial domain unit. For example, the terminal may determine a time domain covariance matrix *R^{s}* based on downlink reference signals on the J time units received through a same frequency domain unit, where each base station spatial domain unit corresponds to a time domain covariance matrix of the base station spatial domain unit, and frequency domain units corresponding to a same base station spatial domain unit correspond to a same time domain covariance matrix.

To be specific, the terminal unifies time domain covariance matrices corresponding to a same spatial-frequency unit received by the antennas, and unifies time domain covariance matrices *R*^{*s*,*f*} corresponding to the same base station spatial domain unit, to obtain the time domain covariance matrix *R^{s}* corresponding to each base station spatial domain unit. *s* represents a spatial domain of the base station.

In some embodiments, a manner of unifying the time domain covariance matrices *R*^{*s*,*f*} includes: performing summation, averaging, or weighted summation on the time domain covariance matrices *R*^{*s*,*f*} corresponding to the same base station spatial domain unit.

A time domain feature of a channel is determined by a Doppler frequency shift of the channel, and the Doppler frequency shift of the channel is determined by an angle of arrival of the channel on a terminal side, that is, a spatial domain feature of the terminal side. Therefore, when ${R}_{{n}_{r}}^{s , f}$ corresponding to terminal spatial domain units *nᵣ* are unified, a complete channel time domain feature can be retained as much as possible.

In some embodiments, the second time domain information may be eigenvectors of the time domain covariance matrix *R^{s}* . If the base station indicates the terminal to report L base station spatial domain units, a quantity of eigenvectors of each time domain covariance matrix *R^{s}* is *K*₂ , and reporting overheads of each eigenvector are Q bits, a quantity of time domain covariance matrices *R^{s}* is L, and reporting overheads of the second time domain information are *LK*₂*Q* bits.

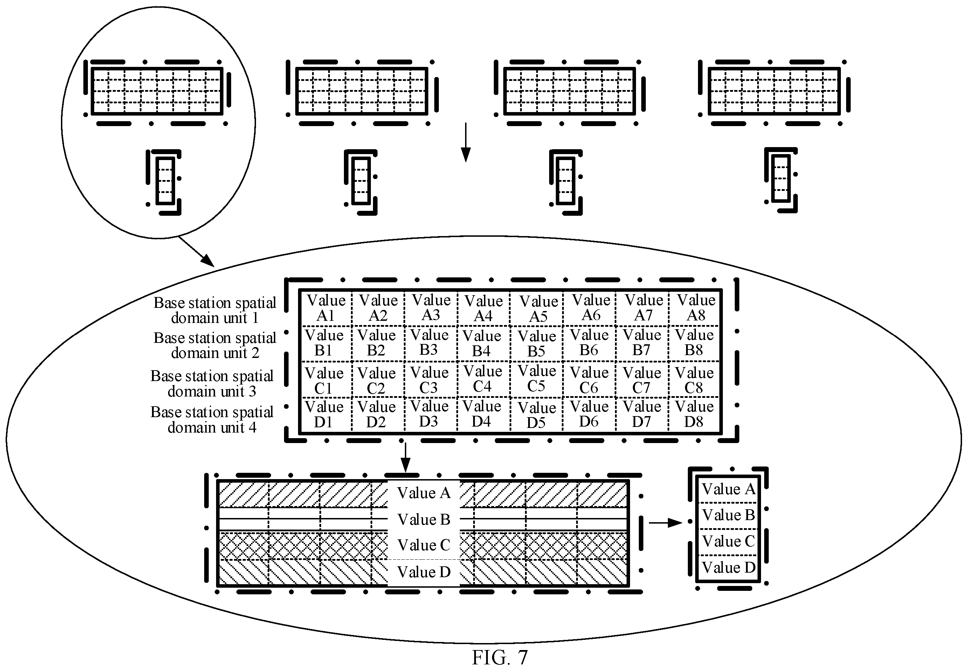

Refer to FIG. 7. A time unit 1 is used as an example. Values of eight time domain covariance matrices *R*^{*s*,*f*} corresponding to eight frequency domain units corresponding to a base station spatial domain unit 1 are respectively a value A1 to a value A8. By analogy, values of eight time domain covariance matrices *R*^{*s*,*f*} corresponding to eight frequency domain units corresponding to each of a base station spatial domain unit 2 to a base station spatial domain unit 4 are respectively a value B1 to a value B8, a value C1 to a value C8, and a value D1 to a value D8. After M frequency domain units corresponding to the base station spatial domain unit are unified, values of time domain covariance matrices *R^{s}* corresponding to the base station spatial domain unit 1 to the base station spatial domain unit 4 are respectively a value A, a value B, a value C, and a value D. The time domain covariance matrices of the frequency domain units are unified, so that (*M-*1)*LK*₂*Q* bits are reduced compared with directly transmitting eigenvectors of a time domain covariance matrix corresponding to each spatial-frequency unit.

In some embodiments, *K*₂ may be *K*₂ eigenvectors that correspond to largest eigenvalues in J eigenvectors obtained by decomposing the time domain covariance matrix *R^{s}*.

For another example, the time domain information includes one piece of third time domain information, and the third time domain information indicates time domain information of a plurality of base station spatial domain units and a plurality of frequency domain units, or the third time domain information indicates time domain information corresponding to a plurality of spatial-frequency units. For example, the terminal may determine a time domain covariance matrix based on a downlink reference signal received by the antenna, and the spatial-frequency units correspond to a same time domain covariance matrix. To be specific, the terminal unifies time domain covariance matrices *R^{s,f}* corresponding to a same spatial-frequency unit received by the antennas, and unifies all time domain covariance matrices *R^{s}*, to obtain the time domain covariance matrix *R.*

In some embodiments, the third time domain information may be eigenvectors of the time domain covariance matrix *R.* If a quantity of eigenvectors of each time domain covariance matrix *R* is *K₃,* and reporting overheads of each eigenvector are Q bits, reporting overheads of the third time domain information are *K*₃*Q* bits.

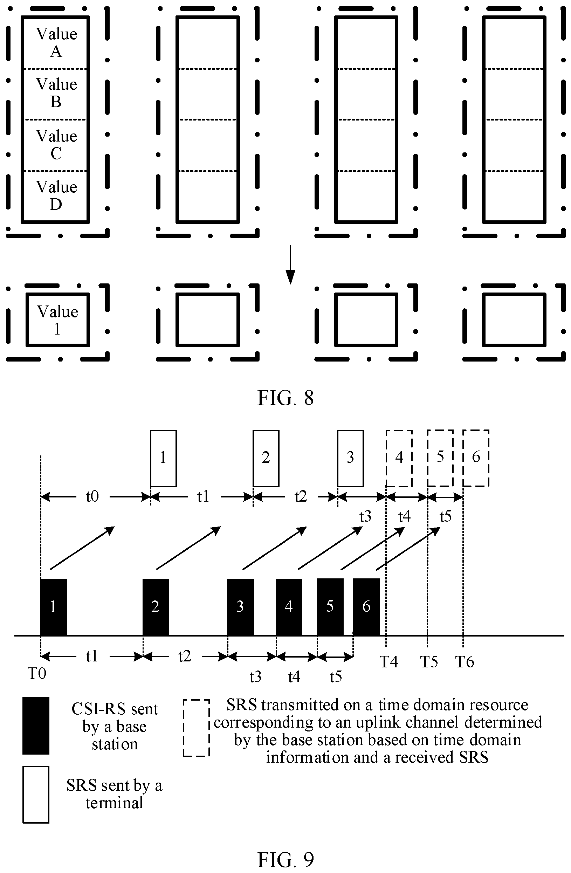

Refer to FIG. 8. A time unit 1 is used as an example. After L base station spatial domain units are unified, a value of a time domain covariance matrix *R* corresponding to the time unit 1 is a value 1. Time domain covariance matrices *R^{s}* of the base station spatial domain units are unified, so that (*L*-1)*K*₃*Q* bits are reduced compared with directly transmitting eigenvectors of a time domain covariance matrix corresponding to each base station spatial domain unit.

In some embodiments, *K₃* may be *K*₃ eigenvectors that correspond to largest eigenvalues in J eigenvectors obtained by decomposing the time domain covariance matrix *R*.

In the foregoing descriptions, as examples, athe terminal unifies ${R}_{{n}_{r}}^{s , f}$ in a manner in which spatial-frequency units are the same, unifies ${R}_{{n}_{r}}^{s , f}$ in a manner in which same base station spatial domain units are the same, and unifies all ${R}_{{n}_{r}}^{s , f}$.

In some other examples, a manner in which the terminal unifies the time domain covariance matrices ${R}_{{n}_{r}}^{s , f}$ may alternatively be: The terminal unifies ${R}_{{n}_{r}}^{s , f}$ in a manner in which same frequency domain units are the same, unifies ${R}_{{n}_{r}}^{s , f}$ in a manner in which terminal spatial domain units are the same and base station spatial domain units are the same, unifies ${R}_{{n}_{r}}^{s , f}$ in a manner in which terminal spatial domain units are the same, or unifies ${R}_{{n}_{r}}^{s , f}$ in a same manner in which terminal spatial domain unit are the same and frequency domain units are the same. A unifying manner may be performing summation, averaging, weighted summation, or the like on ${R}_{{n}_{r}}^{s , f}$.

S403: The terminal sends a first uplink reference signal. Correspondingly, the base station receives the first uplink reference signal.

The time domain information and the first uplink reference signal are used to determine an uplink channel of J1 time units, J1 is a positive integer, and J is greater than J1.

For example, the first uplink reference signal is an SRS or a DMRS.

The base station may send an indication message to the terminal, to indicate a time-frequency resource on which the terminal sends the first uplink reference signal. The terminal sends the first uplink reference signal to the base station on the time-frequency resource. The first uplink reference signal represents an uplink reference signal sent by the terminal.

In some embodiments, there are a plurality of time units for first uplink reference signals, and a time interval between downlink reference signals on every two adjacent time units in the downlink reference signals on the J time units is the same as a time interval between first uplink reference signals on every two adjacent time units in the first uplink reference signals on the plurality of time units.

The base station may indicate, to the terminal based on a time-frequency resource for sending the downlink reference signal, the time-frequency resource for sending the first uplink reference signal, or determine, based on the time-frequency resource for sending the first uplink reference signal that is indicated to the terminal, the time-frequency resource for sending the downlink reference signal, and send the downlink reference signal on the time-frequency resource for sending the downlink reference signal. In this way, the downlink reference signal and the first uplink reference signal meet a condition 1: A time interval between every two adjacent downlink reference signals in the downlink reference signals is the same as a time interval between every two adjacent first uplink reference signals in a plurality of first uplink reference signals.

For example, refer to FIG. 9. A white box represents an SRS, and a black box represents a CSI-RS. An SRS1 to an SRS6 and a CSI-RS1 to a CSI-RS6 are shown in the figure. The SRS1 to the SRS3 represent first uplink reference signals, and the CSI-RS1 to the CSI-RS6 represent downlink reference signals. A dashed-line white box (for example, the SRS4 to the SRS6) represents an SRS transmitted on a time domain resource corresponding to an uplink channel determined by the base station based on the time domain information and a received SRS (for example, the SRS1 to the SRS3). For example, the determined uplink channel may be the uplink channel corresponding to the J1 time units.

For example, the base station sends the CSI-RS1 at a moment T0. The base station may indicate the terminal to send the SRS1 at a moment T0+t0, send the SRS2 at a moment T0+t0+t1, and send the SRS3 at a moment T0+t0+t1+t2. Correspondingly, the base station receives the SRS1 to the SRS3. The base station respectively sends the CSI-RS2 and the CSI-RS3 at a moment T0+t1 and a moment T0+t1+t2. A time interval between the CSI-RS1 and the CSI-RS2 is the same as a time interval between the SRS1 and the SRS2, and both are t1. A time interval between the CSI-RS2 and the CSI-RS3 is the same as a time interval between the SRS2 and the SRS3, and both are t2. In addition, the base station further respectively sends the CSI-RS4, the CSI-RS5, or the CSI-RS6 at a moment T0+t1+t2+t3, a moment T0+t1+t2+t3+t4, or a moment T0+t1+t2+t3+t4+t5, so that the terminal determines the time domain information based on the CSI-RS1 to the CSI-RS6, and reports the time domain information to the base station.

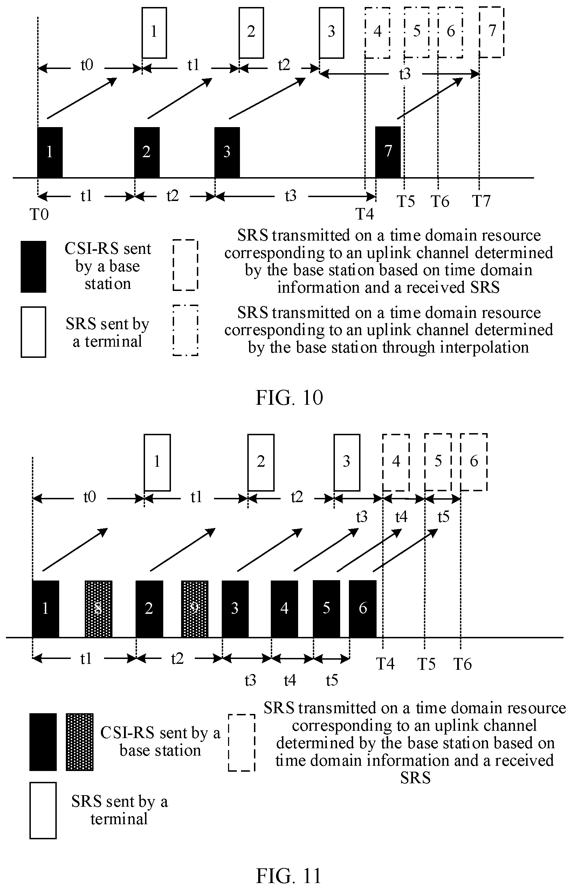

For example, refer to FIG. 10. A white box represents an SRS, and a black box represents a CSI-RS. An SRS1 to an SRS7, a CSI-RS1 to a CSI-RS3, and a CSI-RS7 are shown in the figure. The SRS1 to the SRS3 represent first uplink reference signals, and the CSI-RS1 to the CSI-RS3 and the CSI-RS7 represent downlink reference signals. A dashed-line white box (for example, the SRS7) represents an SRS transmitted on a time domain resource corresponding to an uplink channel determined by the base station based on the time domain information and a received SRS (for example, the SRS1 to the SRS3). For example, the determined uplink channel may be the uplink channel corresponding to the J1 units. A dotted-line white box (for example, the SRS4 to the SRS6) represents an SRS transmitted on a time domain resource corresponding to an uplink channel determined by the base station through interpolation. For example, after determining an uplink channel corresponding to the SRS3 and an uplink channel corresponding to the SRS7, the base station obtains, through interpolation, an uplink channel corresponding to the SRS4 to the SRS6. If an SRS is transmitted on a time domain resource corresponding to an uplink channel A, the uplink channel A may be referred to as an uplink channel corresponding to the SRS. The base station may determine, based on the SRS, an uplink channel corresponding to a time domain resource for transmitting the SRS.

For example, the base station sends the CSI-RS1 at a moment T0. The base station may indicate the terminal to send the SRS1 at a moment T0+t0, send the SRS2 at a moment T0+t0+t1, and send the SRS3 at a moment T0+t0+t1+t2. Correspondingly, the base station receives the SRS1 to the SRS3. The base station sends the CSI-RS2 at a moment T0+t1, and sends the CSI-RS3 at a moment T0+t1+t2. A time interval between the CSI-RS1 and the CSI-RS2 is the same as a time interval between the SRS1 and the SRS2, and both are t1. A time interval between the CSI-RS2 and the CSI-RS3 is the same as a time interval between the SRS2 and the SRS3, and both are t2. In addition, the base station further sends the CSI-RS7 at a moment T0+t1+t2+t3, so that the terminal determines the time domain information based on the CSI-RS1 to the CSI-RS3 and the CSI-RS7, and reports the time domain information to the base station.

For example, refer to FIG. 11. A white box represents an SRS, a black solid box represents a CSI-RS, and a black dotted box represents a CSI-RS. An SRS1 to an SRS6, a CSI-RS1 to a CSI-RS6, a CSI-RS8, and a CSI-RS9 are shown in the figure. The SRS1 to the SRS3 represent first uplink reference signals, and the CSI-RS1 to the CSI-RS6, the CSI-RS8, and the CSI-RS9 represent downlink reference signals. A dashed-line white box (for example, the SRS4 to the SRS6) represents an SRS transmitted on a time domain resource corresponding to an uplink channel determined by the base station based on the time domain information and a received SRS (for example, the SRS1 to the SRS3). For example, the determined uplink channel may be the uplink channel corresponding to the J1 time units.

For example, the base station sends the CSI-RS1 at a moment T0. The base station may indicate the terminal to send the SRS1 at a moment T0+t0, send the SRS2 at a moment T0+t0+t1, and send the SRS3 at a moment T0+t0+t1+t2. Correspondingly, the base station receives the SRS1 to the SRS3. The base station respectively sends the CSI-RS2 and the CSI-RS3 at a moment T0+t1 and a moment T0+t1+t2. A time interval between the CSI-RS1 and the CSI-RS2 is the same as a time interval between the SRS1 and the SRS2, and both are t1. A time interval between the CSI-RS2 and the CSI-RS3 is the same as a time interval between the SRS2 and the SRS3, and both are t2. In addition, the base station further respectively sends the CSI-RS4, the CSI-RS5, or the CSI-RS6 at a moment T0+t1+t2+t3, a moment T0+t1+t2+t3+t4, or a moment T0+t1+t2+t3+t4+t5, so that the terminal determines the time domain information based on the CSI-RS1 to the CSI-RS6, and reports the time domain information to the base station.

In some embodiments, there are a plurality of time units for first uplink reference signals, and a time interval between downlink reference signals on every two adjacent time units in the downlink reference signals on the J time units is different from a time interval between first uplink reference signals on every two adjacent time units in the first uplink reference signals on the plurality of time units.

For example, refer to FIG. 11. The base station may further send the CSI-RS8 between the moment T0 and a moment T0+t1, and send the CSI-RS9 between the moment T0+t1 and the moment T0+t1+t2, so that the terminal determines the time domain information based on the CSI-RS1 to the CSI-RS6, the CSI-RS8, and the CSI-RS9, and reports the time domain information to the base station. Alternatively, after the terminal receives the CSI-RS1 to the CSI-RS6, the CSI-RS8, and the CSI-RS9, based on an indication of the base station to a time unit on which the terminal sends the SRS, the terminal still determines the time domain information based on the CSI-RS1 to the CSI-RS6 in which time interval between every adjacent two CSI-RSs is the same as a time interval between every corresponding adjacent two SRSs. In this case, a time interval between two adjacent CSI-RSs (for example, the CSI-RS1 and the CSI-RS8) is different from a time interval between two adjacent SRSs (for example, the SRS1 and the SRS2).

It should be noted that the terminal may perform S402 and S403 based on a time-frequency resource configured by the base station for the terminal. An execution sequence of S402 and S403 is not limited in this embodiment of this application.

S404: The base station determines the uplink channel based on the time domain information and the first uplink reference signal.

The uplink channel is an uplink channel corresponding to the J1 time units. An uplink channel corresponding to a time unit represents an uplink channel of the time unit. An uplink reference signal corresponding to a time unit may represent an uplink reference signal transmitted on the time unit.

In a related technology, the base station may determine, based on the uplink reference signal corresponding to the time unit, the uplink channel corresponding to the time unit.

In some embodiments, the base station performs channel prediction based on the time domain information and the first uplink reference signal, to obtain the uplink channel corresponding to the J1 time units. Temporal locations of the J1 time units are subsequent to temporal locations of the time units corresponding to the first uplink reference signals.

For example, refer to FIG. 9. The terminal determines the time domain information based on the CSI-RS1 to the CSI-RS6, and sends the time domain information to the base station. The first uplink reference signals are the SRS1 to the SRS3, and the base station determines an uplink channel based on the time domain information and the SRS1 to the SRS3. The uplink channel is an uplink channel corresponding to time units of the SRS4 to the SRS6.

A time interval between time units corresponding to every two adjacent CSI-RSs in the CSI-RS1 to the CSI-RS6 is the same as a time interval between time units corresponding to every two adjacent SRSs in the SRS1 to the SRS6, so that the base station can determine time domain information of the SRS1 to the SRS6 based on time domain information of the CSI-RS1 to the CSI-RS6. Therefore, the base station determines the channel corresponding to the time units for the SRS4 to the SRS6 based on the time domain information of the SRS1 to the SRS6 and a channel corresponding to time units for the SRS1 to the SRS3.

For another example, refer to FIG. 10. The terminal determines the time domain information based on the CSI-RS1 to the CSI-RS3 and the CSI-RS7, and sends the time domain information to the base station. The first uplink reference signals are the SRS1 to the SRS3, and the base station determines an uplink channel based on the time domain information and the SRS1 to the SRS3. The uplink channel is an uplink channel corresponding to a time unit of the SRS7. The base station determines, based on an uplink channel corresponding to a time unit of the SRS3 and the uplink channel corresponding to the time unit of the SRS7, an uplink channel corresponding to time units of the SRS4 to the SRS6. For example, the base station performs interpolation between the uplink channel corresponding to the time unit of the SRS3 and the uplink channel corresponding to the time unit of the SRS7, to obtain the uplink channel corresponding to the time units of the SRS4 to the SRS6. An interpolation method may include linear interpolation, triangular interpolation, Wiener filtering, and the like.

For another example, refer to FIG. 11. The terminal determines the time domain information based on the CSI-RS1 to the CSI-RS6, the CSI-RS8, and the CSI-RS9, and sends the time domain information to the base station. Alternatively, the terminal determines the time domain information based on the CSI-RS1 to the CSI-RS6, and sends the time domain information to the base station. The first uplink reference signals are the SRS1 to the SRS3, and the base station determines an uplink channel based on the time domain information and the SRS1 to the SRS3. The uplink channel is an uplink channel corresponding to time units of the SRS4 to the SRS6.

The following describes a manner in which the base station determines an uplink channel when the time domain information is an eigenvector of *R^{s,f},* an eigenvector of *R^{s},* or an eigenvector of *R.*

For example, when the time domain information is the eigenvector of *R^{s,f},* the base station determines the uplink channel in the following manner.

Refer to FIG. 9. It is assumed that a matrix formed by time domain information, that is, the eigenvector of *R^{s,f},* corresponding to the CSI-RS1 to the CSI-RS6 is ${U}_{1.6}^{s , f}$, and it is assumed that a channel matrix corresponding to a terminal spatial domain unit nᵣ, time units of the SRS1 to the SRS6, and a spatial-frequency unit (s, f) is ${H}_{1 , 6}^{{n}_{r} , s , f}$. Because the time domain information *R^{s,f}* corresponds to the channel matrix ${H}_{1 , 6}^{{n}_{r} , s , f}$, a feature coefficient *C*^{nᵣ} exists, so that the following equation is established: ${H}_{1 , 6}^{{n}_{r} , s , f} = {U}_{1.6}^{s , f} {C}^{{n}_{r}}$ Formula 2

The base station may obtain ${H}_{1 , 3}^{{n}_{r} , s , f}$ based on the first uplink reference signal, where ${H}_{1 , 3}^{{n}_{r} , s , f}$ is a channel matrix corresponding to the time units of the SRS 1 to the SRS3 and the spatial-frequency units (s, f). It can be derived from Formula 2 that ${H}_{1 , 3}^{{n}_{r} , s , f} = {U}_{1.3}^{s , f} {C}^{{n}_{r}}$ Formula 3

The matrix ${U}_{1.3}^{s , f}$ is a matrix formed by row 1 to row 3 of the matrix ${U}_{1.6}^{s , f}$. Therefore, the base station may obtain ${U}_{1.3}^{s , f}$ based on row 1 to row 3 of ${U}_{1.6}^{s , f}$, then obtain *C*^{nᵣ} based on ${H}_{1 , 3}^{{n}_{r} , s , f} , { U}_{1.3}^{s , f}$, and Formula 3, and finally obtain ${H}_{1 , 6}^{{n}_{r} , s , f}$ based on ${U}_{1.6}^{s , f}$ and *C*^{nᵣ}.

For another example, when the time domain information is the eigenvector of *R^{s},* the base station determines the uplink channel in the following manner.

Refer to FIG. 9. It is assumed that a matrix formed by eigenvectors of time domain information *R^{s}* corresponding to the CSI-RS1 to the CSI-RS6 is ${U}_{1.6}^{s}$, and it is assumed that a channel matrix corresponding to a terminal spatial domain unit nᵣ, time units of the SRS 1 to the SRS6, and a spatial-frequency unit (s, f) is ${H}_{1 , 6}^{{n}_{r} , s , f}$. Because the time domain information *R^{s}* corresponds to the channel matrix ${H}_{1 , 6}^{{n}_{r} , s , f}$, a feature coefficient *C*^{nᵣ,*f*} exists, so that the following equation is established: ${H}_{1 , 6}^{{n}_{r} , s , f} = {U}_{1.6}^{s} {C}^{{n}_{r} , f}$ Formula 4

The base station may obtain ${H}_{1 , 3}^{{n}_{r} , s , f}$ based on the first uplink reference signal, where ${H}_{1 , 3}^{{n}_{r} , s , f}$ is a channel matrix corresponding to the time units of the SRS 1 to the SRS3 and the spatial-frequency units (s, f). It can be derived from Formula 4 that ${H}_{1 , 3}^{{n}_{r} , s , f} = {U}_{1.3}^{s} {C}^{{n}_{r} , f}$ Formula 5

The matrix ${U}_{1.3}^{s}$ is a matrix formed by row 1 to row 3 of the matrix ${U}_{1.6}^{s}$. Therefore, the base station may obtain ${U}_{1.3}^{s}$ based on row 1 to row 3 of ${U}_{1.6}^{s}$, then obtain *C*^{nᵣ,*f*} based on ${H}_{1 , 3}^{{n}_{r} , s , f} , { U}_{1.3}^{s}$, and Formula 5, and finally obtain ${H}_{1 , 6}^{{n}_{r} , s , f}$ based on ${U}_{1.6}^{s}$ and *C*^{nᵣ,*f*}.

For another example, when the time domain information is the eigenvector of *R*, the base station determines the uplink channel in the following manner.

Refer to FIG. 9. It is assumed that a matrix formed by eigenvectors of time domain information *R* corresponding to the CSI-RS1 to the CSI-RS6 is U_{1.6}, and it is assumed that a channel matrix corresponding to a terminal spatial domain unit nᵣ, time units of the SRS1 to the SRS6, and a spatial-frequency unit (s, f) is ${H}_{1 , 6}^{{n}_{r} , s , f}$. Because the time domain information *R* corresponds to the channel matrix ${H}_{1 , 6}^{{n}_{r} , s , f}$, a feature coefficient *C*^{nᵣ,*s,*f} exists, so that the following equation is established: ${H}_{1 , 6}^{{n}_{r} , s , f} = {U}_{1.6} {C}^{{n}_{r} , s , f}$ Formula 6

The base station may obtain ${H}_{1 , 3}^{{n}_{r} , s , f}$ based on the first uplink reference signal, where ${H}_{1 , 3}^{{n}_{r} , s , f}$ is a channel matrix corresponding to the time units of the SRS 1 to the SRS3 and the spatial-frequency units (s, f). It can be derived from Formula 6 that ${H}_{1 , 3}^{{n}_{r} , s , f} = {U}_{1.3} {C}^{{n}_{r} , s , f}$ Formula 7

The matrix U_{1.3} is a matrix formed by row 1 to row 3 of the matrix U_{1 6}. Therefore, the base station may obtain U_{1.3} based on row 1 to row 3 of U_{1.6}, then obtain *C*^{nᵣ,*s,f*} based on ${H}_{1 , 3}^{{n}_{r} , s , f}$, U_{1.3}, and Formula 7, and finally obtain ${H}_{1 , 6}^{{n}_{r} , s , f}$ based on U_{1.6} and *C*^{nᵣ,*s,*f}.

According to this embodiment of this application, the terminal determines the time domain information based on the downlink reference signals on the J time units (for example, the time units corresponding to the CSI-RS1 to the CSI-RS6 in FIG. 9), and the base station determines, based on the time domain information and the first uplink reference signals (for example, the SRS1 to the SRS3 in FIG. 9), the uplink channel corresponding to the J1 time units (for example, the time units corresponding to the SRS4 to the SRS6 in FIG. 9). In this way, the base station does not need to wait for the terminal to send uplink reference signals on the J1 time units, and does not need to determine, based on the uplink reference signals, the uplink channel corresponding to the J1 time units. Therefore, time for determining the uplink channel corresponding to the J1 time units is shortened, and accuracy of uplink channel estimation is improved.

For example, refer to FIG. 9. Because uplink channel resources are limited, it is assumed that an average time interval between uplink channel resources allocated by the base station to the terminal for sending SRSs is 5 ms, that is, t1=t2=5 ms. The base station may send a CSI-RS to the terminal once every 1 ms, that is, t3=t4=t5=1 ms. According to this solution, the terminal determines the time domain information based on the CSI-RS1 to the CSI-RS6, and sends the time domain information to the base station. The base station determines, based on the time domain information and the SRS1 to the SRS3 whose time intervals are corresponding to that of the CSI-RS1 to the CSI-RS3, an uplink channel corresponding to the time units of the SRS4 to the SRS6 whose time intervals are corresponding to that of the CSI-RS4 to the CSI-RS6. Therefore, in comparison with the related technology, time for the base station to wait for the terminal to send the SRS4 to the SRS6 is eliminated, and the base station can more quickly determine the uplink channel corresponding to the time units of the SRS4 to the SRS6, to send data through the channel.

In addition, when a moment at which the terminal sends the SRS1 is later than a moment at which the base station sends the CSI-RS1, the base station may predict the uplink channel of the J1 time units (T4, T5, and T6 shown in FIG. 9), to increase a rate for predicting the uplink channel, so that through the uplink channel, the base station precodes data and transmits data to the terminal. In addition, in comparison with reporting existing CSI to the base station by the terminal, that is, reporting complete spatial domain channel information, frequency domain channel information, and time domain channel information, in this embodiment of this application, spatial domain information and frequency domain information of a channel are not reported, and reported time domain information occupies a small quantity of air interface resources, thereby saving a large quantity of air interface resources.

It should be noted that t1 to t5 in FIG. 9 and FIG. 11 may be the same or different, and t1 to t3 in FIG. 10 may be the same or different.

In some embodiments, a quantity of time units for the first uplink reference signals is J2, a predicted uplink channel is the uplink channel corresponding to the J1 time units, a quantity J of time units for the downlink reference signals is greater than or equal to J2+J1, time intervals between adjacent time units in the J2 time units are the same, time intervals between adjacent time units in the J1 time units are the same, the time interval between every two adjacent time units in the J1 time units is smaller than the time interval between every two adjacent time units in the J2 time units, and a time interval between every two adjacent time units in time units for J2 downlink reference signals is the same as a time interval between every two adjacent time units in time units for J2 first uplink reference signals. The time interval between the downlink reference signals may be understood as a time interval between time units for the downlink reference signals, and the time unit for the downlink reference signal is a time unit occupied by the downlink reference signal during transmission.

Optionally, the time interval between two adjacent time units in the J1 time units may include a time interval between time units for downlink reference signals that are adjacent to the J1 time units in the J2 time units, for example, t3 shown in FIG. 9.

For example, refer to FIG. 9. It is assumed that J=6, J1=3, J2=3, t1=t2=5 ms, and t3=t4=t5=1 ms. In this case, J=J2+J1=3+3=6, and t4=t5=1 ms<t1=t2=5 ms.

For another example, refer to FIG. 9. It is assumed that J=6, J1=3, J2=3, t1=6 ms, t2=5 ms, t3=t4=1 ms, and t5=2 ms. In this case, J=J2+J1=3+3=6, and t3=t4=1 ms<t5=2 ms<t2=5 ms<t1=6 ms.

In some other embodiments, a time interval between every two adjacent downlink reference signals in the downlink reference signals on the J time units is the same as a time interval between every two adjacent first uplink reference signals in the plurality of first uplink reference signals.

In some other embodiments, a quantity of time units for the first uplink reference signals is J2, an uplink channel predicted by the base station is the uplink channel corresponding to the J1 time units, a quantity J of time units for the downlink reference signals is greater than or equal to J2+J1, time intervals between adjacent time units in time units for J2 downlink reference signals are the same, time intervals between adjacent time units in time units for J1 downlink reference signals are the same, the time interval between every two adjacent time units in the time units for the J1 downlink reference signals is the same as the time interval between every two adjacent time units in the time units for the J2 downlink reference signals, and the time interval between every two adjacent time units in the time units for the J2 downlink reference signals is the same as a time interval between every two adjacent time units in time units for J2 first uplink reference signals.

For example, refer to FIG. 10. It is assumed that J=4, J1=1, J2=3, and t1=t2=t3=5 ms. In this case, J=J2+J1=3+1=4.

For another example, refer to FIG. 11. It is assumed that J=8, J1=3, J2=3, t1=t2=5 ms, and t3=t4=t5=1 ms. In this case, J=8>J2+J1=3+3=6. The time units for the J2 downlink reference signals are time units corresponding to the CSI-RS1 to the CSI-RS3.

In some embodiments, a quantity of time units for the first uplink reference signals is J2, an uplink channel predicted by the base station is the uplink channel corresponding to the J1 time units, a quantity J of time units for the downlink reference signals is greater than or equal to J2+J1, and in time units for J-J1 downlink reference signals, there are two time units having a time interval therebetween that is the same as a time interval between two time units in time units for J2 first uplink reference signals.

For example, refer to FIG. 11. The first uplink reference signals are the SRS1 to the SRS3, and the uplink channel predicted by the base station is the uplink channel corresponding to the J1 time units, where the uplink channel corresponds to the SRS4 to the SRS6. It is assumed that J=8, J1=3, and J2=3. In this case, J=8>3+3=6. J-J1=five downlink reference signals: the CSI-RS1 to the CSI-RS3, the CSI-RS8, and the CSI-RS9. A time interval between the CSI-RS1 and the CSI-RS2 is the same as a time interval between the SRS1 and the SRS2, and both are t1. A time interval between the CSI-RS2 and the CSI-RS3 is the same as a time interval between the SRS2 and the SRS3, and both are t2. According to this solution, the terminal may determine the time domain information based on the CSI-RS1 to the CSI-RS6, and the base station determines, based on the time domain information and the first uplink reference signal, an uplink channel corresponding to a time unit for a second uplink reference signal.

In some embodiments, the base station may configure J2 time units for the terminal, so that the terminal sends the first uplink reference signals on the J2 time units.

In some other embodiments, the base station may configure periodic time units for the terminal, so that the terminal can continuously send the first uplink reference signals on the periodic time units, and does not configure a limited quantity (for example, J2) of time units. This periodicity may be the same as a time interval between two downlink reference signals sent by the base station. In this case, the base station may determine, based on recently received J2 first uplink reference signals, the uplink channel corresponding to the J1 time units. For example, in FIG. 9, before sending the SRS1, the terminal may further send an SRS7 to an SRS20, and the like. It is assumed that J2=3, and the terminal feeds back the time domain information to the base station at a moment T4. The base station may determine, based on latest three SRSs (that is, the SRS1 to the SRS3), an uplink channel corresponding to the J2 time units.

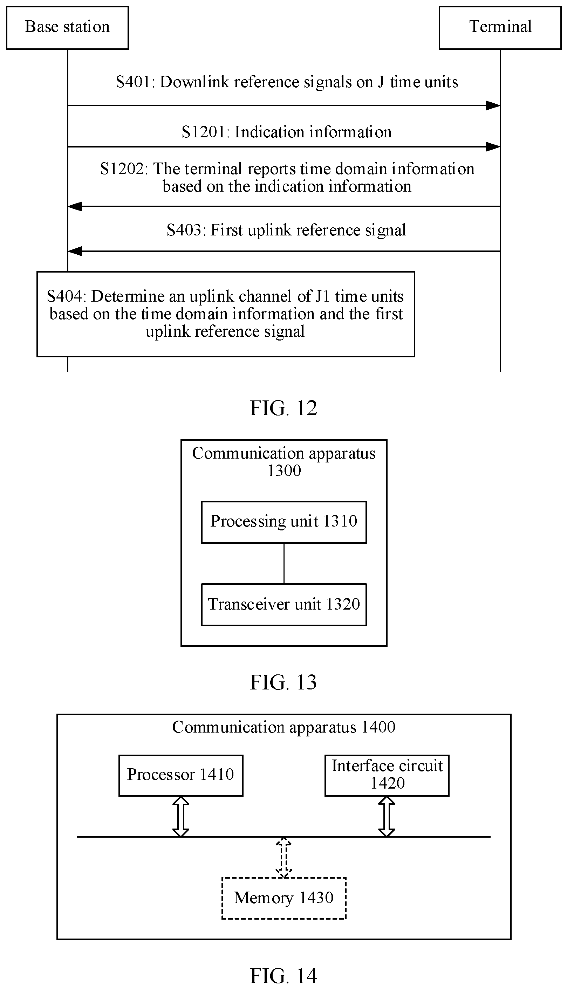

In some other embodiments, the terminal sends different types of time domain information based on an indication of the base station. When receiving the time domain information, the base station may determine an uplink channel based on the type of the time domain information, and does not need to determine the uplink channel by using algorithms for different time domain information types, thereby reducing complexity of determining the uplink channel. Refer to FIG. 12. In these embodiments, S402 is implemented as S1202, and before S1202, the method further includes S1201.

S1201: The base station sends indication information. Correspondingly, the terminal receives the indication information.

The indication information indicates the terminal to report the first time domain information, or indicates the terminal to report the second time domain information, or indicates the terminal to report the third time domain information.

For example, the base station may preset a channel correlation threshold, and indicate the terminal to report the third time domain information. If a channel correlation between the predicted channel, that is, the channel of the J1 time units, and a channel actually measured in the J1 time units is greater than the preset channel correlation threshold, the base station continues to indicate the terminal to report the third time domain information. Otherwise, the base station indicates the terminal to report the second time domain information. If the base station indicates the terminal to report the second time domain information, and the channel correlation between the predicted channel, that is, the channel of the J1 time units, and the channel actually measured in the J1 time units is greater than the preset channel correlation threshold, the base station continues to indicate the terminal to report the second time domain information. Otherwise, the base station indicates the terminal to report the first time domain information.

The channel correlation represents a correlation between a predicted channel and an actual channel. For example, the channel correlation threshold may be 0.9, 0.95, or the like.

S1202: The terminal reports the time domain information based on the indication information.

For example, if the indication information indicates the terminal to report the first time domain information, the terminal reports the first time domain information. For another example, if the indication information indicates the terminal to report the second time domain information, the terminal reports the second time domain information. For another example, if the indication information indicates the terminal to report the third time domain information, the terminal reports the third time domain information.

According to the method in this embodiment of this application, the base station may indicate a form of the time domain information reported by the terminal, for example, one of the foregoing manner 1 to manner 3. Therefore, when the time domain information reported by the terminal is an eigenvector of *R^{s}* or an eigenvector of *R* , a relatively small quantity of air interface resources are occupied.

It should be noted that, in the foregoing embodiments, descriptions of a quantity of reference signals such as J=6 and J1=3 are examples for ease of description with reference to the accompanying drawings. In some other examples, J=10 and J1=3, or J=30 and J1=10, or J=20 and J1=5, and values of J and J1 may be selected according to an actual situation.

Processing performed by a single execution entity (for example, a terminal or a base station) shown in embodiments of this application may alternatively be performed by a plurality of execution entities. These execution entities may be logically and/or physically separated. This is not limited.

In various embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment. For example, a plurality of embodiments described above may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. This is not intended to indicate that the execution sequence is the only sequence in which these operations can be performed. A person of ordinary skill in the art is to figure out a plurality of manners to reorder the operations in this specification. In addition, it should be noted that process details related to a specific embodiment in this specification are also applicable to another embodiment in a similar manner, or different embodiments may be used in combination.

It may be understood that, to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 13 and FIG. 14 are diagrams of possible structures of communication apparatuses according to embodiments of this application. These communication apparatuses may be configured to implement functions of the terminal or the base station in the foregoing method embodiments, and therefore can also implement beneficial effects of the foregoing method embodiments. In embodiments of this application, the communication apparatuses may be the terminal 120 shown in FIG. 1, may be the base station 110 shown in FIG. 1, or may be a module (for example, a chip) used in the terminal or the base station.

As shown in FIG. 13, the communication apparatus 1300 includes a processing unit 1310 and a transceiver unit 1320. The communication apparatus 1300 is configured to implement a function of the terminal or the base station in the method embodiment shown in FIG. 4 or FIG. 12.

When the communication apparatus 1300 is configured to implement the functions of the terminal in the method embodiment shown in FIG. 4, the transceiver unit 1320 is configured to receive downlink reference signals on J time units, report time domain information, and send a first uplink reference signal; and the processing unit 1310 is configured to perform a processing-related function.

When the communication apparatus 1300 is configured to implement the functions of the base station in the method embodiment shown in FIG. 4, the transceiver unit 1320 is configured to send downlink reference signals on J time units, receive time domain information, and receive a first uplink reference signal; and the processing unit 1310 is configured to determine an uplink channel based on the time domain information and the first uplink reference signal.

When the communication apparatus 1300 is configured to implement the functions of the terminal in the method embodiment shown in FIG. 12, the transceiver unit 1320 is further configured to send indication information, and report the time domain information based on the indication information; and the processing unit 1310 is configured to perform a processing-related function.

When the communication apparatus 1300 is configured to implement the functions of the base station in the method embodiment shown in FIG. 12, the transceiver unit 1320 is further configured to receive indication information, and the processing unit 1310 is configured to perform a processing-related function.

For more detailed descriptions of the processing unit 1310 and the transceiver unit 1320, refer to the related descriptions in the method embodiment shown in FIG. 4 or FIG. 12.

As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs instructions.

When the communication apparatus 1400 is configured to implement the method shown in FIG. 4, the processor 1410 is configured to implement functions of the processing unit 1310, and the interface circuit 1420 is configured to implement functions of the transceiver unit 1320.

When the communication apparatus is a chip used in a terminal, the chip in the terminal implements functions of the terminal in the method embodiments. That the chip in the terminal receives information from a base station may be understood as that the information is first received by another module (for example, a radio frequency module or an antenna) in the terminal, and then sent by these modules to the chip in the terminal. That the chip in the terminal sends information to a base station may be understood as that the information is first sent to another module (for example, a radio frequency module or an antenna) in the terminal, and then sent by these modules to the base station.

When the communication apparatus is a chip used in a base station, the chip in the base station implements functions of the base station in the method embodiments. That the chip in the base station receives information from a terminal may be understood as that the information is first received by another module (for example, a radio frequency module or an antenna) in the base station, and then sent by these modules to the chip in the base station. That the chip in the base station sends information to a terminal may be understood as that the information is first sent to another module (for example, a radio frequency module or an antenna) in the base station, and then sent by these modules to the terminal.

In this application, that an entity A sends information to an entity B may be that A directly sends the information to B, or may be that A indirectly sends the information to B via another entity. Similarly, that the entity B receives information from the entity A may be that the entity B directly receives the information sent by the entity A, or may be that the entity B indirectly receives the information sent by the entity A via another entity. The entity A and the entity B herein each may be a RAN node or a terminal, or may be a module in the RAN node or the terminal. Information sending and receiving may be information exchange between a RAN node and a terminal, for example, information exchange between a base station and a terminal. Information sending and receiving may alternatively be information exchange between two RAN nodes, for example, information exchange between a CU and a DU. Information sending and receiving may alternatively be information exchange between different modules in an apparatus, for example, information exchange between a chip in a terminal and another module in the terminal, or information exchange between a chip in a base station and another module in the base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

Optionally, this application further provides a computer program product. All or some of the procedures in the foregoing method embodiments may be implemented by a computer program instructing related hardware. The program may be stored in the computer program product. When the program is executed, the procedures in the foregoing method embodiments may be included.

Optionally, this application further provides computer instructions. All or some of the procedures in the foregoing method embodiments may be completed by the computer instructions instructing relevant hardware (for example, a computer, a processor, a wireless relay device, a terminal, or a RAN node). The program may be stored in a computer-readable storage medium or the computer program product.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

## Claims

1. A channel estimation method, comprising:
receiving downlink reference signals on J time units;
reporting time domain information, wherein the time domain information is time domain information determined based on the downlink reference signals on the J time units; and
sending a first uplink reference signal, wherein the time domain information and the first uplink reference signal are used to determine an uplink channel, the uplink channel is an uplink channel of J1 time units, both J and J1 are positive integers, and J is greater than J1.

2. The method according to claim 1, wherein the time domain information comprises a plurality of pieces of first time domain information, and each of the plurality of pieces of first time domain information indicates time domain information of different frequency domain units and different base station spatial domain units; or the time domain information comprises a plurality of pieces of second time domain information, and each piece of second time domain information indicates time domain information of different base station spatial domain units; or the time domain information comprises one piece of third time domain information, and the third time domain information indicates time domain information of a plurality of base station spatial domain units and a plurality of frequency domain units.

3. The method according to claim 1 or 2, further comprising:
receiving indication information, wherein the indication information indicates a terminal to report the first time domain information, or indicates the terminal to report the second time domain information, or indicates the terminal to report the third time domain information; and the reporting the time domain information comprises: reporting the time domain information based on the indication information.

4. The method according to any one of claims 1 to 3, wherein there are a plurality of time units for first uplink reference signals, and
a time interval between downlink reference signals on every two adjacent time units in the downlink reference signals on the J time units is the same as a time interval between first uplink reference signals on every two adjacent time units in the first uplink reference signals on the plurality of time units.

5. The method according to any one of claims 1 to 3, wherein a quantity of time units for the first uplink reference signals is J2, J is greater than or equal to J2+J1, time intervals between adjacent time units in the J2 time units are the same, time intervals between adjacent time units in the J1 time units are the same, the time interval between every two adjacent time units in the J1 time units is smaller than the time interval between every two adjacent time units in the J2 time units, and a time interval between every two adjacent time units in time units for J2 downlink reference signals is the same as a time interval between every two adjacent time units in time units for J2 first uplink reference signals.

6. The method according to any one of claims 1 to 5, wherein the time domain information is an eigenvector corresponding to a covariance matrix of a channel corresponding to the J time units.

7. A channel estimation method, comprising:
sending downlink reference signals on J time units;
receiving time domain information, wherein the time domain information is time domain information determined based on the downlink reference signals on the J time units;
receiving a first uplink reference signal; and
determining an uplink channel based on the time domain information and the first uplink reference signal, wherein the uplink channel is an uplink channel of J1 time units, both J and J1 are positive integers, and J is greater than J1.

8. The method according to claim 7, wherein the time domain information comprises a plurality of pieces of first time domain information, and each of the plurality of pieces of first time domain information indicates time domain information of different frequency domain units and different base station spatial domain units; or the time domain information comprises a plurality of pieces of second time domain information, and each piece of second time domain information indicates time domain information of different base station spatial domain units; or the time domain information comprises one piece of third time domain information, and the third time domain information indicates time domain information of a plurality of base station spatial domain units and a plurality of frequency domain units.

9. The method according to claim 7 or 8, further comprising:
sending indication information, wherein the indication information indicates a terminal to report the first time domain information, or indicates the terminal to report the second time domain information, or indicates the terminal to report the third time domain information.

10. The method according to any one of claims 7 to 9, wherein there are a plurality of time units for first uplink reference signals, and
a time interval between downlink reference signals on every two adjacent time units in the downlink reference signals on the J time units is the same as a time interval between first uplink reference signals on every two adjacent time units in the first uplink reference signals on the plurality of time units.

11. The method according to any one of claims 7 to 9, wherein a quantity of time units for the first uplink reference signals is J2, J is greater than or equal to J2+J1, time intervals between adjacent time units in the J2 time units are the same, time intervals between adjacent time units in the J1 time units are the same, the time interval between every two adjacent time units in the J1 time units is smaller than the time interval between every two adjacent time units in the J2 time units, and a time interval between every two adjacent time units in time units for J2 downlink reference signals is the same as a time interval between every two adjacent time units in time units for J2 first uplink reference signals.

12. The method according to any one of claims 7 to 11, wherein the time domain information is an eigenvector corresponding to a covariance matrix of a channel corresponding to the J time units.

13. A communication apparatus, comprising a unit or a module configured to perform the method according to any one of claims 1 to 6, or comprising a unit or a module configured to perform the method according to any one of claims 7 to 12.

14. A communication apparatus, comprising a communication interface and at least one processor, wherein the communication interface is configured to receive and/or send a signal, and the processor is configured to enable the method according to any one of claims 1 to 6 to be performed, or the processor is configured to enable the method according to any one of claims 7 to 12 to be performed.

15. A computer-readable storage medium, wherein the computer-readable storage medium stores instructions, and when the instructions are run on a communication apparatus, the communication apparatus is caused to perform the method according to any one of claims 1 to 6, or the communication apparatus is caused to perform the method according to any one of claims 7 to 12.

16. A computer program product, comprising a computer program, wherein when the computer program is executed by a processor, the method according to any one of claims 1 to 6 is implemented, or when the computer program is executed by a processor, the method according to any one of claims 7 to 12 is implemented.
